# EUROPEAN PATENT APPLICATION

(11) **EP 3 199 018 A1**
(43) Date of publication of application: **02.08.2017**
(21) Application number: 15844314.3
(22) Date of filing: 24.09.2015
(51) Int. Cl.: A01G 9/02

(54) **ASSEMBLED, ENVIRONMENTALLY FRIENDLY, RECYCLABLE AND BIODEGRADABLE PAPER POT FOR GROWING SEEDLINGS**

(30) Priority: 26.09.2014 BR 202014023965 U
(71) Applicant: Vieira De Sousa, Claudio, CEP-04012-140 São Paulo, SP (BR); Fantagucci Gonçalves, Marcelo Alexandre, CEP-05065-070 São Paulo, SP (BR)
(72) Inventor: Vieira De Sousa, Claudio, CEP-04012-140 São Paulo, SP (BR); Fantagucci Gonçalves, Marcelo Alexandre, CEP-05065-070 São Paulo, SP (BR)
(74) Representative: Cornuejols, Georges
(86) International application number: PCT/BR2015/000147
(87) International publication number: WO 2016/044907

(57) **Abstract**

The present patent application refers to a mounted, green, recyclable and biodegradable vessel used for the cultivation and commercialization of flower, plant and tree seedlings in general, made from recycled or non-recycled brown *kraft* paper or white paperboard (1), waterproofed by surface treatment of the paper with *primer* containing polymers of special resin (2). The vessel can be printed with non-toxic paint, having lower openings for water flow and air intake, which will preferably be located in the vessel base itself (4) and, at the same time, in the lower edge finish (5), and alternatively the openings (3) may be located only in the lower part of the vessel side, just above the base (4).

The material used and the fact that the vessel is already mounted makes it rigid and impermeable, and enables it to be recycled at the end of its useful life or, if it is sent for final disposal, to be degraded in a significantly shorter time than the vessels existing the market. The product was developed to solve the problem of the destination given to the vessels after their use, contributing to solid waste volume reduction and, consequently, contributing to environmental preservation.

## Description

The present utility model patent application refers to a mounted, green, recyclable and biodegradable vessel used for the cultivation and marketing of flower, plant and tree seedlings in general, made from recycled or non-recycled brown *kraft* paper or white paperboard, waterproofed by the treatment of the paper surface with primer containing polymers of special resin, having lower openings for water flow and air intake, and which can be printed with non-toxic paint.

The rigid paper treated with special resin, while ensuring the rigidity and impermeability of the product, enables it to be recycled at the end of its useful life or, if it is sent to final disposal, to be degraded in a significantly lower time in comparison with the vessels made of materials such as plastic, metal, clay, among others. This allows the same vessel to be used from seedling cultivation to the commercialization of the flower or plant to the end consumer.

### STATE OF THE ART DESCRIPTION

In the current state of the art, there are vessels made of a wide variety of materials (the main ones being: plastic, aluminum, and clay) used to grow flower seedlings, plants and tree species in general. The materials used today, however, prove extremely harmful to the environment, as some are not recyclable and others take hundreds of years to degrade, resulting in increased volume of solid waste generated.

Examples of existing vessels include document BR7302352U (MU 7302352-3 Y1), which discloses a mountable vessel for plant seedlings made of waterproofed paperboard, having center-bottom openings for water drainage, developed to solve the problems existing at the time (early 1990's) of maintenance of earth clod around the roots of plants in seedling phases, as described in the abstract of the mentioned document.

The waterproofing of the vessel object of document BR7302352U is by means of the application of plastic coating or organic wax. However, both alternatives present technical defects that make the use of the vessel unfeasible in the way and with the characteristics proposed by the present utility model.

The waterproofing of the vessel through plastic, as suggested in document BR7302352U, prevents it from being considered biodegradable. The first studies that indicated the possibility of waterproofing paper with special resins did not appear before the 2000s and it was not before 2010 that such paper was launched in the market.

By 2010, the only commercially available alternative to this plastic paper waterproofing was through the application of petroleum by-products (such as polyethylene, polypropylene and terephthalate), and no plastic made from petroleum by-products was biodegradable. The plastic used for paper waterproofing increases the product's decomposition time in hundreds of years and, in the absence of prior and proper paper and plastic separation, it is not even possible to recycle them, which is equally harmful to the environment if compared with other vessels made of plastic, clay, and metal.

Biodegradability is a process whereby material is completely consumed by micro-organisms as a source of food and energy, with no waste or other by-products. A product may only be classified as biodegradable if it complies with certain requirements laid down in technical standards, including: ABNT NBR 15448-2:2008, ISO 14855:1999, OECD 208:1984, EN 13432:2000, e EN 14045:2003. And the plastic made from petroleum by-products, used for the waterproofing of the vessel object of document BR7302352U, does not fulfill said requirements.

According to the book entitled "Embalagem", published by professors of e-Tec Brazil Network, "many plastics that are defined or denominated as biodegradable are not actually completely consumed by micro-organisms, nor are they completely mineralized and, consequently, do not have a specific duration of time for complete disappearance. In this regard, it is a consensus biodegradable means that the degradation should occur within a given time, generally considered a time of approximately 180 days (Greene ET AL, 2009)" *(http:ll200.17.98.44*/*pronateclwp-content*/*uploads*/*2013*/*06*/*Embalagem.pdf).* And this is precisely the case of the plasticized vessel disclosed by document BR7302352U; although it is self-declared biodegradable, it is not. As already mentioned, with the technology existing up to 2010 and, therefore, at the time of document BR7302352U, it is impossible for the vessel to be waterproofed through "plasticization" to be really biodegradable.

The waterproofing proposed in the present utility model patent application is made through the application of special resin, which differs completely from the waterproofing proposed in document BR7302352U, which would occur through "plasticization".

The vessel material object of the present application is proven and certifiably biodegradable.

Regarding the other waterproofing alternative proposed in document BR7302352U, namely, the application of an organic wax, it is important to consider that although the organic wax, in principle, gives this biodegradable character to the vessel object of document BR7302352U, depending on the technique to be used for the closure of the vessel, this characteristic may be lost. One of the closing techniques presented in said document is "grapping". However, the use of staples would remove this biodegradable character from the vessel, since the staples are made of iron.

Regardless of that, what is in fact relevant in this alternative of application of the organic wax proposed in document BR7302352U is that the material does not withstand moisture. The wax is not capable to completely waterproof the surface of the paper, leaving exposed pores through which moisture penetrates. Because of that, the structure of the vessel eventually breaks and/or fungi appear in it.

In addition, the fact that the vessel object of document BR7302352U is mountable implies the compromise of its structure (regardless of its waterproofing being made through plastic or organic wax), since there are several points of contact of moisture with the paper core, in the various flaps, creases, and fittings used in the mounting of this vessel. The creases, fittings, and flaps compromise the fibrous structure of the paper, while reducing its resistance.

That is to say, considering also the time required for the cultivation of seedlings (which varies, on average, from 3 weeks to 6 months), that the vessel object of BR7302352U would not be able to be used from the phase of seedling cultivation until reaching the individual who would be the end consumer of the flower, plant, or any other tree species. The vessel structure would be compromised before it is even commercialized. In this case, in order for the flower and/or plant to be commercialized, it would be necessary to use another vessel, made of another material, generating even more waste.

At the same time, because the vessel object of the BR7302352U document is mountable, there are several points of the vessel through which water could escape, requiring the use of a larger volume of water.

In general terms, what is evidenced from what has been exposed so far is that the vessel object of the document BR7302352U could never be biodegradable and, at the same time, resistant enough to reach the end consumer. The vessel (i) could be biodegradable, if it were waterproofed with organic wax, but in this case it would present structural and functional defects, which would prevent the flower, plant, or any other tree species from being commercialized in that vessel; or (ii) if it were waterproofed with plastic, it would not be biodegradable and, at the same time, due to the great exposure of the paper of the "mountable" vessel to moisture, its resistance would be lower, also resulting in structural and functional defects and preventing the flower, plant or any other tree species from being commercialized in the same vessel where the seedling was grown.

The present application suggests the waterproofing by the treatment of the paper surface with *primer* containing polymers of special resin, a technology which began to be discussed in the academic milieu by 2000 and which became commercially available only by 2010, as mentioned above, guaranteeing the vessel a rigid and functionally efficient structure, at the same time as it makes it certifiably biodegradable. The vessel object of the present invention was created so that it could support the whole seedling grow phase (and all weather incidents in that process) until it is purchased and used by the end consumer together with the respective flower, plant or other tree species and, at the end of its useful life, could be recycled or biodegraded.

The fact that the vessel is already mounted (and not "mountable") causes the paperboard to have the least possible exposure to moisture, ensuring the efficiency and rigidity of the paper fibers and, consequently, the structure of the vessel, differently than it occurs with the vessel object of the document BR7302352U.

In addition, because the vessel is already mounted, there is the possibility of large-scale production and commercialization, in a manner compatible with market demand, always maintaining its biodegradable character.

Focused on existing environmental problems, we sought a way to waterproof a vessel structure made of recycled or non-recycled white paperboard or brown *kraft* paper, other than waterproofing through plastic obtained from petroleum by-products, to reduce the environmental impacts generated with their final destination. It is the creation of something that until then did not exist, which represents a solution to a current problem: the volume of solid waste generated with the disposal of vessels for seedlings at the end of their useful life.

In addition, the vessel object of the document BR7302352U was developed to specifically meet the market for cut flowers and landscaping (seedlings/landscaping) (The market for flowers and plants is basically split into the following segments: cut flowers, vessel flowers, seeds, indoor plants, landscaping plants and foliage *(http:*//*www.sebrae.com.br*/*sites*/*PortalSebrae*/*ideias*/*Como-montaruma-produ%C3%A7%C3%A3o-de-plantas-e-flores-ornamentais#naveCapituloTopo),* limited to the cultivation phase thereof. The description of said document shows that the vessel was developed to replace the "sachets" hitherto used, and the said "sachets" were/are used only for the planting of cut flowers and landscaping and limited to the phase of seedlings cultivation. Moreover, this same description says that the vessel would be absorbed by the soil at the site where the seedling would be planted, ie, the vessel would never leave the soil; it would never reach the end consumer.

At the outset, it is important to note that if the vessel is waterproofed through plastic obtained from petroleum by-products, as suggested in the document BR7302352U, then it could only be absorbed by the earth after hundreds of years, since it would not be a biodegradable object, as already mentioned above.

On the other hand, regardless of this caveat, it is possible to note that the use of the vessel object of the document BR7302352U was designed only for the seedling phase, which is not intended to reach the end consumer.

Meanwhile, the vessel object of the present patent application can be applied not only in the cut flowers and landscaping market, but also in the flowers and vessel plants market, and, moreover, it is not limited only to the seedling cultivation phase. This vessel's useful life begins in the growing of the seedlings and spans through the end consumer and, after being discarded, it degrades within 6 months (if it is not recycled, of course). It is noteworthy that the waterproofing techniques of the vessel object of the document BR7302352U, as well as the fact that it is "mountable", prevents its structure from resisting until the flower or plant is commercialized to the end consumer.

With respect to the cut flowers and landscaping (seedlings/landscaping) market, the seedling may be planted in the soil together with the vessel object of this application and, after the seedlings grow and the flower is harvested, the vessel may be left in the ground or sent to a proper site for recycling or biodegradation.

It is therefore verified that the present product was developed to replace all existing vessels, regardless of the market in question (cut flowers and landscaping, or vessel flowers and plants), because it adopts a new technology that makes the product resistant to moisture, and the only certifiably biodegradable.

The innovation brought about by the present application relates to the creation of a mounted paper vessel, waterproofed by the surface treatment of paper (recycled or non-recycled white paperboard or brown *kraft* paper) with *primer* containing polymers of special resin, which can be printed in non-toxic paint, contributing to solving one of the major problems facing society today, that is, environmental degradation. The material used and the structure of the product ensured a new technical effect insofar as it reduces the vessel's decomposition time compared to the vessels on the market (made of plastic, clay, aluminum, or waterproofed with plastic) and makes recycling possible, reducing the volume of solid waste, besides maintaining the functional characteristics of the vessel unchanged until its final disposal.

To illustrate the problem of solid waste, the following is the decomposition time of some of the main materials used in the manufacture of vessels for flowers, plants, and tree species in general:

| **Material** | **Decomposition time in nature** |
|---|---|
| Paper | 3-6 months |
| Metal | Over 100 years |
| Aluminum | Over 200 years |
| Plastic | Over 400 years |
| Glass | Over 1,000 years |

| | |
|---|---|
| *Source: "SUSTAINABLE CONSUMPTION Educational Manual. Brasilia: Consumers International/ MMA/ MEC/IDEC, 2005." | |

In addition, the product's green appeal, a result of the material used, is a commercial differential, in view of the sustainable consumption growth.

Moreover, the fact that the present utility model patent application refers to an already mounted vessel makes it easier and cheaper for the seedlings producer, since, in cases of seedlings cultivation in scale, the time and the workforce required to mount the vessels would be considerable. In addition, the mounting of the vessels implies additional costs in the process which, in the end, would be reverted to the consumer.

Finally, the possibility of printing (with non-toxic paint) in the vessel object of the present patent application would also be useful for, in addition to the commercial matter, adapting the vessels to the applicable Brazilian Consumer Defense Code. Therefore, it would be possible to print the vessel's provenance, which has never existed in the market and which would comply with the provisions of Article 6, item III, of the Brazilian Consumer Defense Code.

### OBJECTIVE OF THE UTILITY MODEL

With increasing environmental problems, ecologically conscious consumption plays a relevant role in both society present and future. Currently, a large amount of plastic waste is generated (such as vessels made of plastic), but this material is difficult to degrade. According to data released by CEMPRE (Entrepreneurial Commitment for Recycling) in 2011, the solution was studying its substitution for biodegradable and photodegradable plastics, and even then, the degradation was considered slow in landfills at the time *(http:*//*www.cempre.org.br*/*ft_plastico.php).*

In addition to plastic, vessels made of clay, aluminum, or plastic coated materials also take hundreds of years to degrade. This contributes to increasing the volume of solid waste, creating the need for more landfills.

According to the Brazilian Institute of Geography and Statistics (IBGE), through the National Survey of Basic Sanitation (PNSB), 99.96% of the Brazilian municipalities provide Solid Waste Management services, but 50.75% of them dispose of their waste in ditches; 22.54% in controlled landfills; 27.68% in landfills. These same data indicates that 3.79% of the municipalities have an organic waste composting unit; 11.56% have a recyclable waste sorting unit; and 0.61% have incineration treatment plants. The practice of such improper disposal causes serious and damaging consequences to public health and the environment and is associated to the sad socioeconomic background of a large number of socially excluded families surviving from the "dumps" from which they withdraw the recyclable materials they trade.

The current institutional framework is also negative although it is undergoing change. Most municipalities do not yet have the technical and financial resources to solve the problems related to solid waste management. Often, opportunities to establish partnerships with segments that should be involved in the management and search for alternatives for the implementation of solutions are often ignored. Rarely do we use the possibilities and advantages of cooperation with other federated entities through the establishment of public consortia in accordance with the Basic Sanitation Statute (Statute No. 11,445/2007) and the Public Consortia Statute (Statute No. 11,107/2005) and their respective regulatory executive orders, Executive Order No. 7,217/2010 and Executive Order No. 6,017/2007). It is still common to observe the execution of actions in solid waste without previous and appropriate technical-economic planning, which is aggravated by the lack of regulation and social control in the sector." *(http:*//*www.mma.gov.br*/*cidades-sustentaveis*/*residuos-solidos*/*politica-nacional-de-residuos-solidos*/*contextos-e-principais-aspectos).*

On a global scale, the scenario is not any more encouraging. The World Bank drafted, in March 2012, a report called *"What a Waste: The Global Review of Solid Waste Management" (http:*//*web.worldbank.org*/*WBSITE*/*EXTERNAL*/*TOPICSl EXTURBANDEVELOPMENT*/*0,,contentMDK:23172887∼pagePK:210058∼piPK:21006 2∼theSitePK:337178,00.html),* which brought together a lot of data on the production and management of solid urban waste. According to the report, at the time of its elaboration (2012) it was estimated that the total solid waste generated in the world was 1.3 billion tons per year. The report also indicates that it is very likely that by 2025 this number will grow to 2.2 billion tons per year.

The application of the utility model patent hereby sought innovates in the structuring and the combination of materials used in the making of the object, in order to make its use compatible with its proper destination at the end of its useful life. It was necessary to solve the issue of the seedling vessels' destination, considering the great environmental impact caused by the materials previously used in the production of these objects; this is the purpose of the development of this utility model.

The green, recyclable, and biodegradable paper vessel is ultimately geared towards sustainable development. It is an eco-friendly, socially fair, and economically viable product. From the environmental standpoint, the product can be recycled or, if it is sent to final disposal, it will be degraded in considerably less time than the products that currently exist in the market. From the social bias, it will continue to promote the recycling segment, benefiting, without limitation, collectors, in addition to contributing to the improvement of the environmental conditions to which human beings are subject to. Finally, the production cost of the paper vessel waterproofed with special resin and the large existing market guarantee the economic viability of the project.

And, at the same time that it confers this biodegradable character to the product, this utility model also provides a durable vessel, which can be used from the phase of cultivation of the seedling until its purchase and use by the end consumer.

### SUMMARY OF THE DRAWINGS

Figure 1 is a perspective view of the mounted vessel, made of paper, waterproofed by the paper surface treatment with *primer* containing polymers of special resin, having lower openings for water flow and air intake.
Figure 2 is a perspective view of the upside-down vessel, showing the difference between the base of the object and the lower edge finish, as well as the opening for water drainage and air intake.
And Figure 3 is a perspective view of the upside-down vessel with an alternative for locating the opening for water drainage.

### DETAILED DESCRIPTION OF UTILITY MODEL AND DRAWINGS

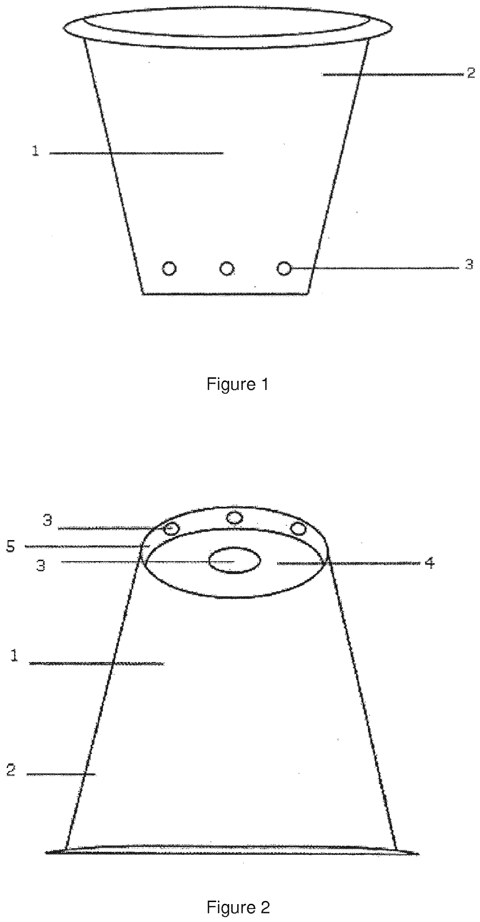

The utility model patent application presented herein comprises, according to Figure 1, mounted, green, recyclable, and biodegradable vessel used for the cultivation of flower, plant and tree seedlings in general, made from recycled or non-recycled brown *kraft* paper or white paperboard (1), waterproofed by surface treatment of the paper with *primer* containing polymers of special resin (2), having lower openings for water flow and air intake (3), and which can be printed with non-toxic paint.

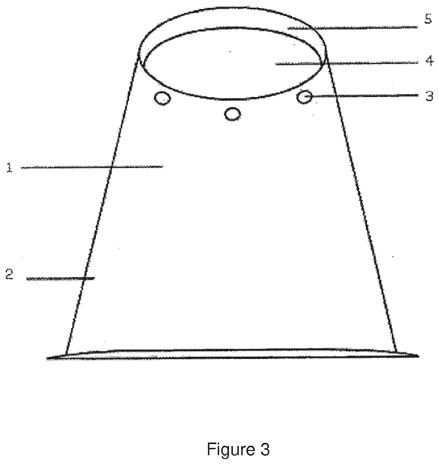

The openings for draining the water and air inlet (3) should preferably be located in the base of the vessel (4) and at the same time in the finishing of the lower edge (5), as shown in Figure 2. Alternatively, the openings (3) may located only in the lower part of the vessel side, just above the base (4), according to Figure 3.

## Claims

1. Mounted, green, recyclable, and biodegradable paper vessel for seedlings cultivation, structured from the waterproofing of recycled or non-recycled white paperboard or brown *kraft* paper (1) through superficial paper treatment with *primer* containing polymers of special resin (2), which can be printed with non-toxic paint, having lower openings for water flow and air intake (3), **characterized in that** it is a recyclable, biodegradable mounted vessel; the lower openings for water flow and air intake will be preferably located in the vessel base (4) and, at the same time, in the lower edge finishing (5), and, alternatively, the openings (3) may be potentially located only in the lower vessel side, just above the base (4).
